**Europäisches Patentamt**

**European Patent Office**

**Office européen des brevets**

(19)

(11) Publication number: **0 002 581**

**B1**

(12) **EUROPEAN PATENT SPECIFICATION**

(45) Date of publication of patent specification: **24.03.82**

(51) Int. Cl.³: **F 16 D 65/10, B 22 D 19/00**

(21) Application number: **78300750.3**

(22) Date of filing: **06.12.78**

(54) **Composite brake drum and process for manufacture thereof.**

(30) Priority: **08.12.77 US 858913**

(43) Date of publication of application:
**27.06.79 Bulletin 79/13**

(45) Publication of the grant of the patent:
**24.03.82 Bulletin 82/12**

(84) Designated Contracting States:
**DE FR GB IT**

(56) References cited:
**CH - A - 361 488**
**DE - C - 691 518**
**GB - A - 473 138**
**US - A - 1 785 424**
**US - A - 2 756 488**
**US - A - 2 840 195**
**US - A - 3 038 563**
**US - A - 3 323 620**
**US - A - 3 354 535**
**US - A - 3 500 972**

(73) Proprietor: **FORD MOTOR COMPANY LIMITED**
**Eagle Way**
**Brentwood Essex CM13 3BW (GB)**
(84) **GB**
(73) Proprietor: **FORD-WERKE AKTIENGESELLSCHAFT**
**Ottoplatz 2 Postfach 210369**
**D-5000 Köln 21 (DE)**
(84) **DE**
(73) Proprietor: **FORD FRANCE SOCIETE ANONYME**
**344 Avenue Napoleon Bonaparte B.P. 307**
**F-92506 Rueil Malmaison Cedex (FR)**
(84) **FR**
(73) Proprietor: **Ford Motor Company**
**Dearborn Wayne Michigan (US)**
(84) **IT**

(72) Inventor: **Petersen, Larry Douglas**
**28652 Alvin**
**Garden City Michigan 48135 (US)**
Inventor: **Squires, Stanley Cook**
**1614 Hoit Tower Drive**
**Bloomfield Hills Michigan 48013 (US)**

(74) Representative: **Drakeford, Robert William et al,**
**Ford Motor Company Limited 15/448, Research &**
**Engineering Centre Laindon**
**Basildon Essex SS15 6EE (GB)**

Courier Press, Leamington Spa, England.

(56) References cited:

Product Engineering, vol. 28, no. 8, August, 1957, (published by McGraw-Hill, 330 West 42nd Street, New York 36) "Wide-Flange Brake Drum", page 151.

Revue De L'Aluminium, vol. 37, no. 273, February, 1960, Redaction-Administration, 11bis, Avenue Kléber, Paris-XVIe.

Boghossian V. "Tambours de frein en alliage Léger, pages 221 to 232.

Composite brake drum and process for manufacture thereof

This invention relates to composite brake drums for motor vehicles and processes for manufacturing such brake drums.

Fuel economy improvements demand size and weight reduction of motor vehicle components while often at the same time requiring improved structural properties. It is known that die casting with light metal as with aluminium alloy can replace some features in brake drums to reduce weight.

For example, British Patent Specification No. 473138 discloses a 2-part brake drum comprising a cast iron braking ring and a sheet metal backing plate the periferal edge of which extends radially into the braking ring and is provided with apertures or recesses which fill with cast iron to provide a key between the backing plate and the braking ring.

Page 225 of the publication "Revue de l'Aluminium" Vol. 37, No. 273 also illustrates, in Fig. 7, a 2-part construction for a brake drum in which the periferal edge of a backing sheet of pressed sheet material extends radially into a braking ring. The sheet material includes a radially convoluted annular section between the perifery and the central section for flexibility.

US Patent Specification No. 2840195 discloses a 3 part composite brake drum comprising a substantially bi-planar back plate of sheet material having a mid-section with a centre hole in a first radial plane, a perifery in a second radial plane and an annular portion connecting the mid section and the perifery; a cast iron braking ring having a smooth inner braking surface; and a die cast aluminium barrel which is interlocked with the outer surface of the braking ring. The perifery of the back plate includes an axial flange which is sandwiched between the outer circumferential edge of the braking ring and the material of the barrel, and the annular portion of the back plate includes radial stiffening ribs.

Composite brake drums of the three-part kind must not only be light in weight but must also be durable. The connection between the back plate and the two other components of three-part drums is especially susceptible to deterioration under the vibrational and bending forces applied to the brake drum in use.

According to the present invention there is provided a composite brake drum comprising a substantially bi-planar back plate having a mid-section with a centre hole and spaced wheel mounting holes in a first radial plane, a perifery in a second radial plane, and an annular portion connecting the mid-section and the perifery; a cast iron braking ring having a smooth inner braking surface and a rough outer surface; and a die-cast barrel which is interlocked with the outer surface of the braking ring and which is composed of a metal having a specific gravity less than that of the material from which the braking ring is composes; characterised in that the back plate is composed of stamped steel; the annular portion includes a section of convoluted radial cross-section which extends in part in a direction generally parallel to the central axis of the brake drum; the outermost edge of the perifery extends radially into the barrel and has a plurality of apertures or recesses spaced therearound; and the barrel is composed of a metal having a specific gravity less than that of the back plate which lies in contact with both sides of the perifery of the back plate and with a radial face of the braking ring, thereby supporting the braking ring in a position axially spaced from the back plate, and fills the apertures or recesses in the perifery of the back plate.

By providing the convoluted section in the annular portion of the back plate, the midsection of the plate can move relative to the perifery thereby reducing the loads applied to the connection between the barrel and the back plate. Since the outermost edge of the back plate extends radially into the barrel, and is spaced axially from the braking ring, the interlock between the barrel and the edge of the back plate, produced by the penetration of the material of the barrel into the apertures or recesses, is maximised. The interlock between the braking ring and the barrel is also strengthened by the contact between the material of the barrel and the radial face of the braking ring.

The invention also includes a process for manufacturing a composite brake drum in accordance with the invention which comprises supporting the braking ring in a mould axially spaced from the back plate and casting the barrel from aluminium or light metal alloy around the braking ring and the back plate so that the metal contacts both sides of the periphery of the back plate, fills the apertures or recesses therein, and the axial space between the back plate and the braking ring, and bonds to the rough outer surface of the braking ring.

A preferred embodiment of the invention will now be described, by way of example only, with reference to the drawings, in which :—

Figure 1 is a partial radial cross section of the composite brake drum taken from its open end showing the stamped steel back plate, cast iron braking ring and aluminium die cast barrel that is partially cut away.

Figure 2 is an axial cross sectional view of the brake drum of Figure 1.

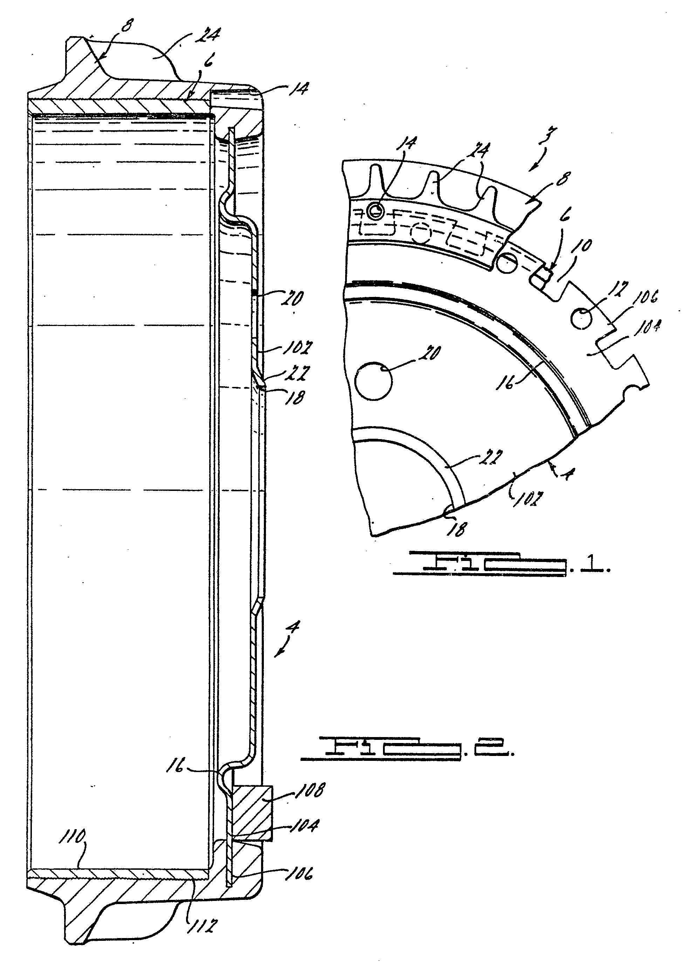

In Figure 1 the composite brake drum 3 is shown with a stamped steel back plate 4, a cast iron braking ring 6 of uniform radial cross-section and a barrel 8 of die cast aluminium (e.g. SAE380) or light-weight metal alloy. The stamped steel back plate 4 has a perifery, the outermost edge of which lies in a radial plane and contains apertures 12 and recesses 10. The back plate 4 also has annular portions containing a convoluted section 16 that projects in part toward the open end of brake drum 3. The convoluted section 16 permits flexing during braking in order to reduce brake roughness.

The drum plate 4 also has a mid section containing a hole 18, for engagement with an axle shaft, along with equally spaced holes 20 for wheel attachment studs (not shown). A bevel 22 surrounding the centre hole 18 provides a pilot for centering the drum on the axle shaft (not shown).

The aluminium or light weight alloy or barrel 8 that joins the back plate 4 and the cast iron braking ring 6 at its outer rough surface also forms ribs or fins 24 that project radially outward from the braking ring 6 and provide a means for heat rejection from the brake drum. About 30 or more, e.g. 37 such equally spaced fins normally are sufficient for desired heat rejection even under extreme conditions). In making the brake drum, the braking ring 6 is supported in a mould by ring support pins (not shown) that project through at least three pin support holes as 14 during die casting of the barrel 8 about the back plate 4 and braking ring 6.

Referring now to Figure 2, the stamped steel back plate 4 is substantially biplanar with the midsection 102 comprising the centre hole 18 and the wheel bolt holes 20 in a first plane. The midsection 102 has the bevel edge 22 that projects away from the braking surface. It further comprises a perifery 104 in a second radial plane. The outermost edge 106 of the perifery 104 comprises the apertures and recesses (12, 10) (as is more clearly seen in Figure 1) and is encased in the die cast alloy of barrel 8 such that the radial dimension of back plate 4 alternatively exceeds and falls short of the radial dimension of cast iron braking ring 6. The material of the barrel locks the barrel to the back plate by filling of the holes and voids of its outermost edge and also lies in contact with the sides of the perifery of the back plate and with the opposed radial face of the braking rim 6, thereby supporting the braking ring 6 in a position axially spaced from the back plate 4.

The perifery 104 and the midsection 102 are connected through the flexible convoluted section 16 which extends from the perifery 104 in a direction parallel to the central axis of the drum toward the braking ring in an arc having a radial dimension perpendicular to each of the planes of perifery 104 and midsection 102. It can be seen that the barrel 8 extends beyond the plane of the mid-section 102 in both directions perpendicular to the plane of the mid-section. A balance weight 108 is easily attached welding or other means to outer perifery 104 after die casting.

The cast iron braking ring 6 has a smooth inner braking surface 110 and a rough outer surface 112 which provides for strong bond between it and die cast barrel 8. The braking ring 6 is conventionally centrifugally cast, the rough outer surface having its mould coating removed by light sand or grit blast to provide peaks from about ten one thousandth to one tenth inch high. Such braking rings made of gray iron are commercially available as in Bulletin No. 610214-762M of Dana Corporation.

It is to be understood that the relative thickness of the braking ring 6 and barrel 8 may be modified in accordance with desired processing and final brake drum characteristics. Thus, for example, the braking ring may be made somewhat thinner than that of the drawings thereby permitting some reduction in weight by replacement with more lightweight metal, but a tradeoff such as braking ring distortion may be seen during processing. Conversely, an increase in the thickness while providing possibly some performance improvement does increase weight as well as allowing a greater possibility of chilling of the die cast than at lesser dimensions.

In making the composite brake drum herein, the preheated cast iron braking ring 6 is mounted on the preformed stamped steel drum back 4 by means of support pins which pass through the apertures or recesses 10, 12 and, when removed from the casting leave holes in the barrel 8, as seen at 14 in Figures 1 and 2 and the braking ring 6 is also mounted on a mandrel which passes through the centre hole 18. Die casting is accomplished using high pressure, e.g. preferably well above 280 kg/sq cm (4000 psi) as for example, 560 kg/sq cm (8000 psi) or more and conventional moulding techniques. An example of bimetal die casting appears in U.S. 3,069,209. After die casting, the casting is normalized to relieve casting stresses, the steel drum back is coined, and the braking ring is finally machined and balanced. Advantageously, the drum normally requires less than a usual amount of balancing because of inherent balancing accomplished by die casting.

A composite brake drum as hereinbefore described and set forth in the drawings was tested under extreme service conditions and found to be suitable for commercial use on motor vehicles, particularly compact or subcompact automobiles as well as in trucks, and large vehicles. The brake drum exhibits front/rear temperature, balance, fade pressures, and pedal travels similar to heavier cast iron drums of comparable design features. Further, the composite drum withstood prolonged high terminal inputs, thermal shock (e.g. twenty-five fade stops followed by immediate immersion in water) and abusive mountain driving without failing. In short, the composite brake drum herein provides reduced weight and cost as compared to ones having cast drum back whole providing a highly acceptable and commercially desirable brake drum performance.

The selection of materials for use in the manufacture of the components of the brake drum of the invention allow the production of brake drums of reduced weight without requiring an increase in wheel tread dimensions. Moreover, the drum can be balanced using conventional welding techniques and can be secured using conventional axle flange attachments so that it can be removed for servicing without difficulty.

**Claims**

1. A composite brake drum comprising a substantially bi-planar back plate (4) having a mid-section (102) with a centre hole (18) and spaced wheel mounting holes (20) in a first radial plane, a perifery (104) in a second radial plane, and an annular portion connecting the mid-section and the perifery; a cast iron braking ring (6) having a smooth inner braking surface (110) and a rough outer surface (112); and a die-cast barrel (8) which is interlocked with the outer surface of the braking ring and which is composed of a metal having a specific gravity less than that of the material from which the braking ring is composed; characterised in that the back plate is composed of stamped steel; the annular portion includes a section (16) of convoluted radial cross-section which extends in part in a direction generally parallel to the central axis of the brake drum; the outermost edge of the perifery extends radially into the barrel and has a plurality of apertures or recesses (10, 12) spaced therearound; and the barrel is composed of a metal having a specific gravity less than that of the back plate which lies in contact with both sides of the perifery of the back plate and with a radial face of the braking ring, thereby supporting the braking ring in a position axially spaced from the back plate, and fills the apertures or recesses in the perifery of the back plate.

2. A brake drum in accordance with Claim 1 wherein the said section (16) of the annular portion has a radial cross-sectional shape extending from said perifery (104) in said second plane to said mid-section (102) in said first plane in curvilinear fashion that comprises an arc with a radial dimension perpendicular to said first plane.

3. A brake drum in accordance with Claim 1 or Claim 2 wherein a portion of said die-cast barrel (8) extends beyond the plane of said mid-section in both directions perpendicular to said mid-section.

4. A brake drum in accordance with any one of Claims 1 to 3 wherein said die-cast barrel (8) comprises heat rejection means (24) extending radially outwardly from said braking ring.

5. A brake drum in accordance with any one of Claims 1 to 4 which comprises balance means (108) attached to said back plate (4) near its perifery (104).

6. A brake drum in accordance with any one of Claims 1 to 5 wherein the barrel (8) is composed of aluminium.

7. A method for making a composite brake drum according to any one of claims 1 to 6 which comprises supporting the braking ring (6) in a mould axially spaced from the back plate (4) and casting the barrel from aluminium or light metal alloy around the braking ring and the back plate so that the metal contacts both sides of the periphery of the back plate, fills the apertures or recesses (10, 12) therein, and the axial space between the back plate and the braking ring, and bonds to the rough outer surface (12) of the braking ring.

8. A process in accordance with Claim 7 wherein said braking ring (6) is positioned in the mould adjacent the back plate (4) by pins which carry said braking ring and extend through one or more of said apertures or recesses (10, 12).

**Patentansprüche**

1. Verbundbremstrommel, bestehend aus einer im wesentlichen diplanaren Grundplatte (4), die einen Mittelabschnitt (102) mit einem Mittenloch (18) und auf Abstand angeordneten Radbefestigungslöchern (20) in einer ersten Radialebene, einen Aussenumfang (104) in einer zweiten Radialebene sowei einen den Mittelabschnitt und den Aussenumfang verbindenden ringförmigen Teil aufweist, einem gusseisernen Bremsring (6) mit einer glatten inneren Bremsfläche (110) und einer rauhen Aussenfläche (112) sowie einem druckgegossenen Mantel (8), der mit der Aussenfläche des Bremsrings verriegelt ist und aus einem Metall niedriger Dichte als der des Bremsringmaterials besteht, dadurch gekennzeichnet, dass die Grundplatte aus gestampftem Stahl besteht, der ringförmige Teil einen sich teilweise in einer der Mittelachse der Bremstrommel im allgemeinen parallelen Richtung erstreckenden Abschnitt (16) gewundenen Radialquerschnitts umfasst, die äusserste Kante des Umfangs sich radial in den Mantel hinein erstreckt und eine Mehrzahl darum auf Abstand angeordneter Oeffnungen oder Ausnehmungen (10, 12) aufweist, und der Mantel aus einem Metall niedrigere Dichte als der der Grundplatte besteht und an beiden Seiten deren Umfangs und an der Radialfläche des Bremsrings anliegt, wodurch sich dieser in einer Stellung in axialem Abstand von der Grundplatte abstützt und die Oeffnungen oder Ausnehmungen im Umfang der Grundplatte ausfüllt.

2. Bremstrommel nach Anspruch 1, dadurch gekennzeichnet, dass der besagte Abschnitt (16) des ringförmigen Teils eine radiale Querschnittform aufweist, die von jenem Umfang (104) in besagter zweiter Ebene zu jenem Mittelabschnitt (102) in besagter erster Ebene gekrümmt verläuft und dabei einen Bogen mit einer radialen Abmessung senkrecht zur ersten Ebene umfasst.

3. Bremstrommel nach Anspruch 1 oder 2, dadurch gekennzeichnet, dass sich ein Teil des besagten druckgegossenen Mantels (8) in beiden Richtungen senkrecht zu jenem Mittelabschnitt über dessen Ebene hinaus erstreckt.

4. Bremstrommel nach einem der Ansprüche 1 bis 3, dadurch gekennzeichnet, dass besagter druckgegossener Mantel (8) Wärmeabfuhrmittel (24) umfasst, die von jenem Bremsring radial nach aussen verlaufen.

5. Bremstrommel nach einem der Ansprüche 1 bis 4, gekennzeichnet durch an besagte Grundplatte (4) nahe ihrem Umfang (104) angebrachte Ausgleichsmittel (108).

6. Bremstrommel nach einem der Ansprüche 1 bis 5, dadurch gekennzeichnet, dass der Mantel (8) aus Aluminium besteht.

7. Verfahren zur Herstellung einer Verbundbremstrommel nach einem der Ansprüche 1 bis 6, dadurch gekennzeichnet, dass man den Bremsring (6) in einer Form in axialem Abstand von der Grundplatte (4) abstützt und den Mantel aus Aluminium oder einer Leichtmetalllegierung um den Bremsring und die Grundplatte herum giesst, sodass das Metall mit beiden Seiten des Umfangs der Grundplatte in Berührung kommt, die Oeffnungen oder Ausnehmungen (10, 12) darin sowie den axialen Raum zwischen der Grundplatte und dem Bremsring ausfüllt und sich mit der rauhen Aussenfläche (112) des Bremsring verbindet.

8. Verfahren nach Anspruch 7, dadurch gekennzeichnet, dass besagter Bremsring (6) in der Form neben der Grundplatte (4) mittels Stiften positioniert wird, welche jenen Bremsring tragen und eine oder mehrere jener Oeffnungen oder Ausnehmungen (10, 12) durchsetzen.

Revendications

1.—Tambour de frein composite comprenant un plateau en substance biplanaire (4) présentant une section centrale (102) percée d'un trou central (18) et de trous de montage de roue espacés (20) dans un premier plan radial, une périphérie (104) dans un second plan radial et une partie annulaire reliant la section centrale et la périphérie; une couronne de freinage en fonte (6) présentant une surface de freinage intérieure lisse (110) et une surface extérieure rugueuse (112) et un corps cylindrique coulé sous pression (8) qui est agrafé à la surface externe de la couronne de freinage et qui est fait d'un métal dont la densité est inférieure à celle de la matière dont la couronne de freinage est constituée, caractérisé en ce que le plateau est en acier embouti, la partie annulaire comprend une partie (16) de section radiale ondulée qui s'étend pour partie dans un sens en substance parallèle à l'axe central du tambour de frein, le bord extérieur de la périphérie s'étend radialement dans le corps cylindrique et présente plusieurs ouvertures ou encoches (10, 12) espacées circonférentiellement et le corps cylindrique est fait d'un métal ayant une densité inférieure à celle du plateau qui est en contact avec les deux faces de la périphérie du plateau et avec une face radiale de la couronne de freinage de manière à supporter la couronne de freinage dans une position espacée axialement du plateau et qui remplit les ouvertures ou les encoches prévues dans la périphérie du plateau.

2.—Tambour de frein suivant la revendication 1, caractérisé en ce que la partie (16) de la partie annulaire a une forme en coupe radiale partant de la périphérie (104) dans le second plan et allant jusqu'à la section centrale (102) dans le premier plan qui suit unde courbe comprenant un arc présentant une dimension radiale perpendiculaire au premier plan.

3.—Tambour de frein suivant la revendication 2, caractérisé en ce qu'une partie du corps cylindrique coulé sous pression (8) s'étend au-delà du plan de la section centrale dans les deux directions perpendiculairement à la section centrale.

4.—Tambour de frein suivant l'une quelconque des revendications 1 à 3, caractérisé en ce que le corps cylindrique coulé sous pression (8) comprend un moyen de dissipation de la chaleur (24) qui s'étend radialement vers l'extérieur à partir de la couronne de freinage.

5.—Tambour de frein suivant l'une quelconque des revendications 1 à 4, caractérisé en ce qu'il comprend des moyens d'équilibrage (108) attachés au plateau (4) près de sa périphérie (104).

6.—Tambour de frein suivant l'une quelconque des revendications 1 à 5, caractérisé en ce que le corps cylindrique (8) est en aluminium.

7.—Procédé pour fabriquer un tambour de frein composite suivant l'une quelconque des revendications 1 à 6, caractérisé en ce qu'on monte la couronne de freinage (6) dans un moule à une certaine distance axiale du plateau (4) et on coule le corps cylindrique en aluminium ou en un alliage léger autour de la couronne de freinage et du plateau de telle sorte que le métal vienne en contact avec les deux faces de la périphérie du plateau, remplisse les ouvertures ou les encoches (10, 12) qui y sont prévues ainsi que l'espace axial entre le plateau et la couronne de freinage et adhère à la surface extérieure rugueuse (12) de la couronne de freinage.

8.—Procédé suivant la revendication 7, caractérisé en ce que la couronne de freinage (6) est positionnée dans le moule près du plateau (4) par des broches qui portent la couronne de freinage et qui traversent une ou plusieurs ouvertures ou encoches (10, 12).

0 002 581

FIG. 1.

FIG. 2.

1